# EUROPÄISCHE PATENTSCHRIFT

(11) **EP 0 797 601 B1**
(45) Veröffentlichungstag und Bekanntmachung des Hinweises auf die Patenterteilung: **02.12.1998**
(21) Anmeldenummer: 95919452.3
(22) Anmeldetag: 13.05.1995
(51) Int. Cl.: C08F 26/00, C02F 1/54, D21H 21/10

(54) **STABILE WASSER-IN-ÖL-EMULSIONEN VON HYDROLYSIERTEN POLYMERISATEN VON N-VINYLAMIDEN, IHRE HERSTELLUNG UND IHRE VERWENDUNG**
STABLE WATER-IN-OIL EMULSIONS OF HYDROLYSED POLYMERS OF N-VINYL AMIDES, THEIR PREPARATION AND THEIR USE
EMULSIONS EAU DANS HUILE STABLES DE POLYMERISATS HYDROLYSES DE N-VINYLAMIDES, LEUR PREPARATION ET LEUR UTILISATION

(30) Priorität: 25.05.1994 DE 4418156
(43) Veröffentlichungstag der Anmeldung: 01.10.1997
(73) Patentinhaber: BASF AKTIENGESELLSCHAFT, 67056 Ludwigshafen (DE)
(72) Erfinder: HARTMANN, Heinrich, D-67117 Limburgerhof (DE); SCHNEIDER, Karl-Heinrich, D-67271 Kleinkarlbach (DE); DENZINGER, Walter, D-67346 Speyer (DE); NILZ, Claudia, D-67127 Rödersheim-Gronau (DE); MÖNCH, Dietmar, D-69469 Weinheim (DE)
(86) Internationale Anmeldenummer: EP9501818
(87) Internationale Veröffentlichungsnummer: WO9532227

(56) Entgegenhaltungen:
- EP-A- 0 000 424
- EP-A- 0 264 649
- EP-A- 0 623 630

## Beschreibung

Die Erfindung betrifft ein Verfahren zur Herstellung von stabilen Wasser-in-Öl-Emulsionen von hydrolysierten Polymerisaten von N-Vinylcarbonsäureamiden durch Hydrolyse der Polymerisate in Form von Wasser-in-Öl-Polymeremulsionen in Gegenwart von Emulgatoren, die so erhältlichen Wasser-in-Öl-Polymeremulsionen und ihre Verwendung als Flockungsmittel, Retentionsmittel und Dispergiermittel.

Partiell hydrolysierte Polymerisate von N-Vinylformamid sind beispielsweise aus der US-A-4 421 602 bekannt. Die darin beschriebenen linearen basischen Polymerisate enthalten als charakteristische Komponenten 90 bis 10 Mol-% Vinylamin-Einheiten und 10 bis 90 Mol% N-Vinylformamid-Einheiten. Sie werden durch Polymerisieren von N-Vinylformamid und Hydrolysieren der Polymerisate in gelöster Form in Gegenwart von Säuren oder Basen hergestellt. Die Polymerisation des N-Vinylformamids kann zwar auch nach Art einer Wasser-in-Öl-Polymerisation vorgenommen werden, jedoch gelingt es nicht, daraus durch Hydrolyse stabile Wasser-in-Öl-Emulsionen der verseiften Polymerisate herzustellen.

Aus der US-A-4 623 699 ist ein Verfahren zur Herstellung von pulverförmigen, linearen, basischen Polymerisaten bekannt, die Vinylamin- und N-Vinylformamid-Einheiten einpolymerisiert enthalten, bei dem man pulverförmige Polymerisate des N-Vinylformamids in Gegenwart von höchstens 5 Gew.-% Wasser, bezogen auf das eingesetzte Polymerisat, mit einer gasförmigen Halogenwasserstoffsäure hydrolysiert. Die Hydrolyse des Polymeren wird vorzugsweise in Abwesenheit von Wasser durchgeführt. Die Teilchengröße des N-Vinylformamidpolymerisats beträgt 10 bis 1000, vorzugsweise 50 bis 400 µm.

Aus der EP-A-0216387 ist ein Verfahren zur Herstellung von Vinylamin-Einheiten einpolymerisiert enthaltenden wasserlöslichen Copolymerisaten durch Copolymerisieren von
(a) 95 bis 10 Mol-% N-Vinylformamid mit
(b) 5 bis 90 Mol-% eines ethylenisch ungesättigten Monomeren aus der Gruppe Vinylacetat, Vinylpropionat, C₁- bis C₄-Alkylvinylether, N-Vinylpyrrolidon, Ester, Nitrile und Amide von Acrylsäure und Methacrylsäure und anschließende Hydrolyse des Copolymerisates
bekannt, bei dem 30 bis 100 Mol-% der Formylgruppen aus dem Copolymerisat abgespalten werden. Die Herstellung der Polymerisate kann zwar als Wasser-in-öl-Emulsion erfolgen, jedoch wird die Hydrolyse in wäßriger Suspension bzw. einer wäßrigen Lösung in Form einer Paste durchgeführt.

Aus der EP-A-0231901 ist die Herstellung von besonders hochmolekularen Polymerisaten des N-Vinylformamids bekannt, bei dem man ein besonders gereinigtes N-Vinylformamid in Form einer Wasser-in-Öl-Emulsion der Polymerisation unterwirft.

Aus der EP-A-0262577 und der EP-A-0264649 ist ebenfalls das Polymerisieren von N-Vinylformamid sowie von substituierten N-Vinylamiden in Form einer Wasser-in-Öl-Emulsion bekannt, jedoch erfolgt auch hier die Hydrolyse jeweils in wäßriger Lösung.

Verdünnte wäßrige Lösungen von hochmolekularen N-Vinylamineinheiten einpolymerisiert enthaltenden Polymerisaten haben eine sehr hohe Viskosität. So sind beispielsweise 5 %ige wäßrige Lösungen nicht mehr pumpbar. Für eine wirtschaftliche Anwendung von hydrolysierten Polymerisaten von N-Vinylamiden bieten sich daher Wasser-in-Öl-Polymeremulsionen an, die auch bei Polymergehalten von 20 bis 40 Gew.-% noch eine relativ niedrige Viskosität haben, so daß sie pumpbar sind.

Aus der GB-A-1 562 417 ist ein Verfahren zur Herstellung von sedimentationsstabilen Wasser-in-Öl-Dispersionen von Acrylamidpolymerisaten bekannt, bei dem man die Polymerisation in Gegenwart von Emulgatoren durchführt, die erhältlich sind durch Umsetzung von Glycidylethern von C₁₀- bis C₂₂-Fettalkoholen mit 2- bis 6-wertigen Alkoholen, die 2 bis 6 Kohlenstoffatome aufweisen oder deren Monoethern, die sich von C₁₀- bis C₂₂-Alkoholen ableiten, im Molverhältnis Glycidylether zu Alkohol von 1:0,5 bis 1:6. Diese Emulgatoren können gegebenenfalls noch im Molverhältnis 1:1 bis 6 mit Alkylenoxiden umgesetzt sein, die 2 bis 4 Kohlenstoffatome aufweisen.

Aus der EP-A-0 374 646 ist ein Verfahren zur Herstellung von stabilen Wasser-in-Öl-Emulsionen von hydrolysierten Polymerisaten von N-Vinylamiden bekannt, bei dem man als Emulgatoren die in der oben zitierten GB-A-1 562 417 beschriebenen Verbindungen einsetzt. Ein Nachteil dieser Emulgatoren ist, daß höher konzentrierte Wasser-in-Öl-Emulsionen mit Polymergehalten von mehr als 25 Gew.-% nur schwer herstellbar sind und relativ hohe Viskositäten aufweisen.

Der vorliegenden Erfindung liegt die Aufgabe zugrunde, ein Verfahren zur Herstellung von stabilen Wasser-in-Öl-Emulsionen von hydrolysierten Polymerisaten von N-Vinylamiden zur Verfügung zu stellen, wobei die Wasser-in-Öl-Polymeremulsionen der teilweise oder vollständig hydrolysierten N-Vinylamide gegenüber den bekannten Wasser-in-Öl-Polymeremulsionen bei gleichem Polymergehalt eine niedrigere Viskosität haben sollen.

Die Aufgabe wird erfindungsgemäß gelöst mit einem Verfahren zur Herstellung von stabilen Wasser-in-Öl-Emulsionen von hydrolysierten Polymerisaten von N-Vinylamiden der Formel 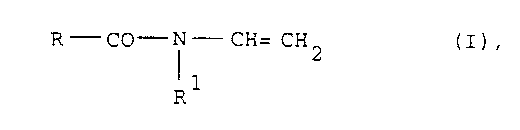 in der R, R¹ = H oder C₁- bis C₆-Alkyl bedeuten, durch Polymerisieren von Verbindungen der Formel 1 allein oder in Mischung mit anderen ethylenisch ungesättigten Monomeren in Gegenwart von Polymerisationsinitiatoren und Emulgatoren in Form von Wasser-in-Öl-Emulsionen zu Wasser-in-Öl-Polymeremulsionen und anschließende Hydrolyse der Polymerisate in Form der Wasser-in-Öl-Polymeremulsionen in Gegenwart von Säuren oder Basen und 1 bis 30 Gew.-%, bezogen auf die Polymerisate, an Emulgatoren, wenn man als Emulgatoren Mischungen aus
(a) 5 bis 95 Gew.-% eines Block- oder Pfropfcopolymerisats der Struktur (A-B)ₘ, (A)ₙB oder (B)ₙA, in der jeweils
   A ein hydrophobes Homo- oder Copolymerisat mit einem Polymerisationsgrad von mindestens 3,
   B ein hydrophiles Homo- oder Copolymerisat mit einem Polymerisationsgrad von mindestens 3,
   m ≥ 1 und n ≥ 2 ist,
   und
(b) 5 bis 95 Gew.-% eines anderen Wasser-in-Öl-Emulgators mit einer Molmasse unterhalb von 1000 g/mol
einsetzt.

Bei dem Emulgator (a) betragen die Molmassenanteile A und B in den Strukturen (A-B)ₘ, (A)ₙ-B und/oder (B)ₙ-A vorzugsweise mindestens 500 g/mol.

Die Emulgatormischungen enthalten vorzugsweise
(a) amphiphile Block- oder Pfropfcopolymeren der allgemeinen Formel (A-COO)ₘ-B, in der A ein hydrophobes Polymer mit einer Molmasse von > 500 g/mol auf Basis einer Polyhydroxycarbonsäure, B ein bifunktionelles hydrophiles Polymer mit einer Molmasse von > 500 g/mol auf Basis eines Polyalkylenoxids und m mindestens 2 ist und
(b) Sorbitanmonooleat, Sorbitanmonostearat, Sorbitandioleat, Sorbitantrioleat und/oder Sorbitantristearat.

Die Polymerisation der Vinylamide der Formel I erfolgt vorzugsweise bereits in Gegenwart der obengenannten Emulgatormischungen. Die so erhältlichen Wasser-in-Öl-Polymeremulsionen sind für die Verwendung leicht zu handhaben. Die Herstellung von stabilen Wasser-in-Öl-Emulsionen von hydrolysierten Polymerisaten von N-Vinylamiden erfolgt in zwei Verfahrensschritten. Im ersten Verfahrensschritt wird eine Wasser-in-Öl-Emulsion von Poly-N-Vinylamiden hergestellt, indem man N-Vinylamide der Formel 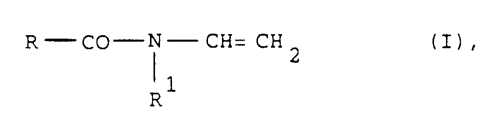 in der R, R¹ = H oder C₁- bis C₆-Alkyl bedeuten, der Polymerisation unterwirft. Vorzugsweise werden solche N-Vinylamide eingesetzt, bei denen R und R¹ für H stehen, d.h. N-Vinylformamid. Andere geeignete N-Vinylamide der Formel I sind beispielsweise N-Vinyl-N-methylformamid, N-Vinylacetamid und N-Vinyl-N-methylacetamid.

Die N-Vinylamide können auch zusammen mit anderen damit copolymerisierbaren ethylenisch ungesättigten Monomeren copolymerisiert werden. Solche Comonomere sind beispielsweise monoethylenisch ungesättigte C₃- bis C₅-Carbonsäuren, deren Salze, Ester, Nitrile und Amide. Einzelne Verbindungen dieser Art sind beispielsweise Acrylsäure, Methacrylsäure, Maleinsäure, Fumarsäure, Crotonsäure, Itaconsäure, Acrylamid, Methacrylamid, Acrylamidoglykolsäure, Acrylnitril, Methacrylnitril, Acrylsäuremethylester, Methacrylsäuremethylester, Dimethylaminoethylacrylat, Dimethylaminoethylmethacrylat, Diethylaminoethylacrylat, Diethylaminoethylmethacrylat, Sulfonsäuregruppen enthaltende Monomere, z.B. Vinylsulfonsäure, Allylsulfonsäure, Methallylsulfonsäure, Styrolsulfonsäure, Acrylsäure-(3-sulfopropyl)ester, Methacrylsäure-(3-sulfopropyl)ester und Acrylamidomethylpropansulfonsäure sowie Phosphonatgruppen enthaltende Monomere, wie Vinylphosphonat, Allylphosphonat, Methallylphosphonat und Acrylamidomethylpropanphosphonsäure. Außerdem eignen sich Hydroxyalkylester von Acrylsäure und Methacrylsäure, beispielsweise 2-Hydroxyethylacrylat, 2-Hydroxypropylacrylat, 3-Hydroxypropylacrylat sowie 2-Hydroxyethylmethacrylat und Hydroxypropylmethacrylat. Zu dieser Gruppe von Monomeren gehören auch Vinylglykol, N-Vinylpyrrolidon, N-Vinylcaprolactam, N-Vinylimidazol, N-Vinylmethylimidazol, N-Vinyl-2-methylimidazolin, N-Vinyl-2-ethylimidazolin, Vinylformiat, Vinylacetat, Vinylpropionat, Vinylbutyrat, sowie Mischungen der genannten Monomeren. Diejenigen ethylenisch ungesättigten Monomeren, die Carbonsäure-, Sulfonsäure- oder Phosphonsäuregruppen enthalten, werden bei der Polymerisation vorzugsweise in teilweise oder auch in. vollständig neutralisierter Form eingesetzt. Zur Neutralisation verwendet man vorzugsweise Alkalimetallbasen, wie Natronlauge oder Kalilauge bzw. Ammoniak oder Amine, z.B. Trimethylamin, Ethanolamin oder Triethanolamin. Die basischen Monomeren werden vorzugsweise in Form.der Salze mit Mineralsäuren, z.B. Salzsäure oder Schwefelsäure, oder in quarternisierter Form eingesetzt (geeignete Quarternierungsmittel sind beispielsweise Dimethylsulfat, Diethylsulfat, Methylchlorid, Ethylchlorid oder Benzylchlorid). Generell gilt für die Herstellung von Wasser-in-Öl-Polymerisaten, daß die Monomeren zunächst in Wasser gelöst bzw. emulgiert werden. Diejenigen Comonomeren, die sich nicht so gut in Wasser lösen, z.B. Acrylnitril, Methacrylnitril oder Methacrylsäurebutylester, werden daher maximal in einer solchen Menge bei der Polymerisation eingesetzt, wie es ihrer Löslichkeit in Wasser oder in der wäßrigen Monomerlösung entspricht.

Vorzugsweise stellt man in der ersten Stufe des erfindungsgemäßen Verfahrens zunächst Wasser-in-Öl-Polymeremulsionen von Homopolymerisaten des N-Vinylformamids her oder Copolymerisate aus
(1) 99 bis 1 Mol-% N-Vinylformamid und
(2) 1 bis 99 Mol-% eines ethylenisch ungesättigten Monomeren aus der Gruppe Vinylformiat, Vinylacetat, Vinylpropionat, N-Vinylpyrrolidon, N-Vinylcaprolactam, N-Vinylimidazol, N-Vinyl-2-methylimidazol, N-Vinyl-2-ethylimidazol sowie der Salze, Ester, Nitrile und Amide von Acrylsäure und Methacrylsäure oder deren Mischungen.

Diese Polymerisate werden dann in der 2. Verfahrensstufe hydrolysiert.

Bei der Copolymerisation kann man gegebenenfalls auch eine weitere Gruppe von Monomeren (3) mitverwenden, die sich in Wasser lösen und mindestens zwei ethylenisch ungesättigte Bindungen im Molekül aufweisen. Hierbei handelt es sich um sogenannte Vernetzer, wie beispielsweise Methylen-bis-acrylamid, N,N'-Divinylethylenharnstoff, N,N'-Divinylpropylenharnstoff, Ethyliden-bis-3-vinylpyrrolidon sowie Acrylsäure-, Methacrylsäure- und Maleinsäureester von zwei- oder mehrwertigen Alkoholen, z.B. Ethylenglykoldiacrylat und Ethylenglykoldimethacrylat. Weitere geeignete Ester dieser Art erhält man beispielsweise bei der Veresterung von mehrwertigen Alkoholen, z.B. Glycerin, Pentaerythrit, Glucose, Fructose, Sucrose, Polyalkylenglykolen eines Molekulargewichts von 400 bis 2.000, Polyglycerinen eines Molekulargewichts von 126 bis 368 mit Acrylsäure, Methacrylsäure oder Maleinsäure, wobei man pro Mol des eingesetzten Alkohols mindestens 2 Mole einer der genannten Carbonsäuren oder auch eine Mischung der genannten Carbonsäuren einsetzt. Sofern wasserslösliche Vernetzer bei der Polymerisation der N-Vinylamide allein oder in Mischung mit anderen wasserlöslichen Monomeren eingesetzt werden, beträgt der Anteil an Vernetzern, bezogen auf die gesamte Monomermischung, 10 bis 20.000, vorzugsweise 100 bis 10.000 ppm.

Man stellt zunächst eine wäßrige Monomerlösung her, die einen pH-Wert von 4 bis 9, vorzugsweise 5 bis 8 aufweist. In vielen Fällen empfiehlt es sich, zusätzlich noch in Gegenwart von Puffern zu arbeiten, z.B. zur wäßrigen Phase primäres oder sekundäres Natriumphosphat zuzusetzen. Die Konzentration der Monomeren in der wäßrigen Lösung beträgt beispielsweise 5 bis 60, vorzugsweise 10 bis 50 Gew.-%.

Die wäßrige Monomerphase wird in einem hydrophoben organischen Dispersionsmedium emulgiert. Geeignete organische, mit Wasser praktisch nicht mischbare Flüssigkeiten sind geradkettige und verzweigte aliphatische Kohlenwasserstoffe, wie Pentan, Hexan, Octan, Isooctan, Decan, Dodecan, Paraffinöle und flüssige gesättigte Kohlenwasserstoffmischungen, deren Siedepunkte bei Normaldruck (1.013 mbar) in dem Bereich von 120 bis 350°C liegen. Außer geradkettigen und verzweigten aliphatischen Kohlenwasserstoffen können auch gesättigte cyclische Kohlenwasserstoffe verwendet werden, wie Cyclohexan, Methylcyclohexan, Dimethylcyclohexan, Ethylcyclohexan, Cyclopentan, Cycloheptan und Cyclooctan. Ebenso ist es möglich, Mischungen aus den genannten Kohlenwasserstoffen einzusetzen, wie sie üblicherweise in Benzinschnitten vorliegen. Solche Mischungen können auch aromatische Kohlenwasserstoffe enthalten. Genauso gut ist es möglich, als hydrophobes organisches Dispersionsmedium reine aromatische Kohlenwasserstoffe einzusetzen, wie Toluol, Xylole, Ethylbenzol, Cumol und Benzol sowie chlorierte Kohlenwasserstoffe, wie Perchlorethylen, Tetrachlorethylen, 1,1,1-Trichlorethan und Tetrachlorkohlenstoff. Vorzugsweise verwendet man Gemische aus gesättigten Kohlenwasserstoffen, die bis zu 20 Gew.-% Naphthene enthalten. Die gesättigten Kohlenwasserstoffe bestehen dabei hauptsächlich aus n- und 1-Paraffinen. Die Siedegrenzen solcher Kohlenwasserstoffmischungen betragen bei 1.013 mbar 150 bis 260°C (bestimmt nach ASTMD 1078/86).

Weiterhin kann die Ölphase (hydrophobes organisches Dispersionsmedium) aus pflanzlichen und tierischen Ölen bestehen. Bei diesen Ölen kann es sich um denaturierte bzw. raffinierte Produkte handeln. Hauptbestandteile der natürlichen Öle sind in erster Linie Triglyceride, deren Carbonsäureanteil sich von ein- oder mehrfach ethylenisch ungesättigten sowie von gesättigten C₁₀- bis C₃₀-Fettsäuren ableitet. Geeignete pflanzliche Öle sind beispielsweise Olivenöl, Safloröl, Sojaöl, Erdnußöl, Cottonöl, Rapsöl, Sonnenblumenöl, Kaffeeöl, Leinöl und deren Gemische. Als tierische Öle kommen Fischöle in Betracht, z.B. Sardinenöl, Heringsöl, Lachsöl, Haifischleberöl und Walfischtran. Außer den Fischölen kommen als Ölphase Talgöl, Knochenöl und Schmalzöl in Betracht. Sowohl die reinen Öle als auch Mischungen beliebiger Öle können die Ölphase der Wasser-in-Öl-Polymeremulsionen bilden. Bevorzugte Öle sind Sonnenblumenöl, Rapsöl, Sojaöl und Talgöl.

Ebenfalls als Ölphase verwendbar sind aliphatische Dicarbonsäureester. Bevorzugt sind solche von der Adipinsäure und Sebacinsäure wie z.B. Bis-(2-ethylhexyl)-sebacat, Bis-(2-ethylhexyl)-adipat, Bernsteinsäuredidodecylester und Adipinsäuredipropylester, vgl. DE-B-35 24 950.

Eine weitere Substanzklasse, die als Ölphase geeignet ist, sind aliphatische Ether, insbesondere Monoether wie z.B. Di-n-Octylether, n-Octyl-n-nonylether, Di-n-decylether und Di-n-nonylether, vgl. DE-A-41 11 334.

Der Anteil der Ölphase (hydrophobes organisches Dispersionsmedium) am Aufbau der Wasser-in-Öl-Polymeremulsion beträgt in den meisten Fällen beispielsweise 10 bis 70, vorzugsweise 20 bis 50 Gew.-%.

Die Polymerisation der Monomeren erfolgt in Gegenwart von unter Polymerisationsbedingungen Radikale bildender Initiatoren, z.B. in Gegenwart von Peroxiden, Hydroperoxiden, Wasserstoffperoxid, Azoverbindungen oder sogenannter Redoxkatalysatoren. Als radikalische Initiatoren sind alle diejenigen Verbindungen geeignet, die bei der jeweils gewählten Polymerisationstemperatur eine Halbwertszeit von weniger als 3 Stunden aufweisen. Falls man die Polymerisation zunächst bei niedrigerer Temperatur startet und bei höherer Temperatur zu Ende führt, so ist es zweckmäßig, mit mindestens 2 bei verschiedenen Temperaturen zerfallenden Initiatoren zu arbeiten, nämlich zunächst einen bereits bei niedrigerer Temperatur zerfallenden Initiator für den Start der Polymerisation einzusetzen und dann die Hauptpolymerisation mit einem Initiator zu Ende zu führen, der bei höherer Temperatur zerfällt. Man kann wasserlösliche sowie wasserunlösliche oder Mischungen von wasserlöslichen und wasserunlöslichen Initiatoren einsetzen. Die in Wasser unlöslichen Initiatoren sind dann in der organischen Phase löslich.

Geeignete Initiatoren sind beispielsweise Acetylcyclohexansulfonylperoxid, Diacetylperoxidicarbonat, Dicyclohexylperoxidicarbonat, Di-2-ethylhexylperoxidicarbonat, tert.-Butylperneodecanoat, 2,2'-Azobis-(4-methoxy-2,4-dimethylvaleronitril), 2,2'-Azobis(2-methyl-N-phenylpropionamidin)dihydrochlorid, 2,2'-Azobis(2-methylpropionamidin)dihydrochlorid, tert.-Butylperpivalat, Dioctanoylperoxid, Dilauroylperoxid, 2,2'-Azobis(2,4-dimethylvaleronitril), Dibenzoylperoxid, tert.-Butylper-2-ethylhexanoat, tert.-Butypermaleinat, 2,2-Azobis-(isobutyronitril), Dimethyl-2,2'-azobisisobutyrat, Bis-(tert.-butylperoxid)-cyclohexan, tert.-Butylperoxiisopropylcarbonat, tert.-Butylperacetat, 2,2-Bis-(tert.-butylperoxi)-butan, Dicumylperoxid, di-tert.-amylperoxid, Di-tert.-butylperoxid, p-Menthanhydroperoxid, Pentanhydroperoxid, Cumolhydroperoxid und tert.-Butylhydroperoxid.

Verwendet man zusätzlich noch Salze von Schwermetallen, z.B. Kupfer-, Kobalt-, Mangan-, Eisen-, Nickel-, Vanadium- und Chromsalze oder organische Verbindungen wie Benzoin, Dimethylanilin, Ascorbinsäure zusammen mit mindestens einem der oben angegebenen Initiatoren, so können die Halbwertszeiten der angegebenen radikalbildenden Initiatoren verringert werden. So kann man beispielsweise tert.-Butylhydroperoxid unter Zusatz von 5 ppm Kupfer-II-acetylacetonat bereits so aktivieren, daß bereits bei 100°C polymerisiert werden kann. Die reduzierende Komponente von Redoxkatalysatoren kann auch beispielsweise von Verbindungen wie Natriumsulfit, Natriumbisulfit, Natriumformaldehydsulfoxylat und Hydrazin gebildet werden.

Bezogen auf die bei der Polymerisation eingesetzten Monomeren verwendet man in der Regel z.B. 100 bis 10.000, vorzugsweise 100 bis 5.000 ppm eines Polymerisationsinitiators oder einer Mischung mehrerer Polymerisationsinitiatoren.

Die Polymerisation kann gegebenenfalls in Gegenwart von Reglern durchgeführt werden. Geeignete Regler sind beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan, außerdem Allylverbindungen, wie Allylalkohol, Aldehyde, wie Acetaldehyd, Propionaldehyd, n-Butyraldehyd und iso-Butyraldehyd sowie Ameisensäure und Isopropanol. Falls die Polymerisation in Gegenwart von Reglern durchgeführt wird, benötigt man davon 0,05 bis 5 Gew.-%, bezogen auf die bei der Polymerisation eingesetzten Monomeren. Manchmal ist es vorteilhaft, Monomere der Gruppe 3 gemeinsam mit Reglern einzusetzen.

Die öllöslichen polymeren Wasser-in-Öl-Emulgatoren (Komponente (a) der Emulgatormischung) sind beispielsweise Di- und Triblockcopolymere auf Basis von Polystyrol und Polyethylenoxid, wie sie in ACS Polym. Prepr. Vol. 18, 329 (1977), in DE-B-2 301 224 und DE-A-4 134 967 beschrieben sind. Geeignet sind auch Di- und Triblockcopolymere auf Basis von Alkylmethacrylaten und Polyethylenoxid, beschrieben in Polym. Jr., 8, 190 (1976), sowie Di- und Triblockcopolymere auf Basis Polyisobuten und Polyethylenoxid, beschrieben in Polym. Bnd. 13, 115 (1985), sowie Pfropfcopolymere auf Basis Polystyrol und Polyvinylpyrrolidon, bekannt aus Angew. Macromol. Chemie, 132, 81 (1985). Weiterhin sind polymere Emulgatoren geeignet wie sie in EP-B-0 214 758 und US-A-4 339 371 beschrieben sind.

Bevorzugte öllösliche Wasser-in-Öl-Emulgatoren der Komponente (a) sind aus der EP-A-0 000 424 bekannt. Vorzugsweise kommen als Emulgator der Komponente (a) Blockcopolymerisate des Typs ABA in Betracht, deren Block A aus kondensierter 12-Hydroxystearinsäure und deren Block B aus Polyethylenoxid mit einem Molgewicht von mehr als 500 g pro Mol besteht. Das Molgewicht des Blocks A beträgt ebenfalls mehr als 500 g/mol. Blockcopolymerisate dieser Art sind im Handel unter der Bezeichnung Hypermer B246 und Hypermer B261 erhältlich. Sie haben HLB-Werte in dem Bereich von 5 bis 9. Die Emulgatormischungen enthalten vorzugsweise 10 bis 70 Gew.-% dieser Blockcopolymeren.

Als Komponente (b) der Emulgatormischungen kommen andere Wasser-in-Öl-Emulgatoren in Betracht, die ein Molgewicht von weniger als 1.000 g pro Mol aufweisen. Geeignete Wasser-in-Öl-Emulgatoren der Komponente (b) mit HLB-Werten von 2 bis 10, vorzugsweise 3 bis 7, sind beispielsweise Mono-, Di- und Polyglycerin-Fettsäureester, wie Monooleat, Dioleat, Monostearat, Distearat und Palmitat-Stearat. Diese Ester sind beispielsweise dadurch erhältlich, daß man Mono-, Di- und Polyglycerine oder Mischungen der genannten mehrwertigen Alkohole mit langkettigen Fettsäuren verestert, z.B. mit Ölsäure, Stearinsäure oder Palmitinsäure. Außerdem eignen sich als Wasser-in-Öl-Emulgatoren Sorbitan-Fettsäureester, wie insbesondere Sorbitanmonooleat, Sorbitandioleat, Sorbitantrioleat, Sorbitanmonostearat und Sorbitantristearat. Andere geeignete Wasser-in-Öl-Emulgatoren sind Mannit-Fettsäureester, wie Mannit-Monolaurat oder Mannit-Monopalmitat, Pentaerythrit-Fettsäureester, wie Pentaerythrit-Monomyristat, Pentaerythrit-Monopalmitat, Pentaerythritdipalmitat, Polyethylenglykol-Sorbitan-Fettsäureester, insbesondere die Monooleate, Polyethylenglykol-Mannit-Fettsäureester, insbesondere Monooleate und Trioleate, Glucose-Fettsäureester, wie Glucose-Monooleat und Glucose-Monostearat, Trimethylolpropandistearat, Reaktionsprodukte von Isopropylamid mit Ölsäure, Glycerin-Sorbitanfettsäureester, ethoxylierte Alkylamine, Hexadecyl-Natriumphthalat und Decylnatriumphthalat. Man kann als (b) der Emulgatormischung auch die aus der GB-A-1 562 417 bekannten Wasser-in-Öl-Emulgatoren verwenden. Bevorzugt werden Sorbitanmonooleat, Sorbitanmonostearat, Sorbitandioleat, Sorbitantrioleat, Sorbitantristearat oder deren Mischungen als Komponente (b) eingesetzt, wobei Sorbitanmonooleat die besten Ergebnisse liefert. Die Emulgatormischung ist in einer Menge von 1 bis 30, vorzugsweise 1 bis 20 Gew.-% (berechnet auf Monomere) in der erfindungsgemäßen Wasser-in-Öl-Polymeremulsion enthalten. Die Emulgatoren der Gruppe (b) sind vorzugsweise zu 90 bis 30 Gew.-% in der Emulgatormischung enthalten.

Die Wasser-in-Öl-Polymeremulsionen können ferner gegebenenfalls bis zu 10 Gew.-%, bezogen auf die gesamte Emulsion, eines Netzmittels mit einen HLB-Wert von mehr als 10 enthalten (zur Definition des HLB-Wertes vgl. W.C. Griffin, Journal of Society of Cosmetic Chemist, Band 1, 311 (1950). Geeignete Netzmittel mit einem HLB-Wert über 10 sind beispielsweise ethoxylierte Alkylphenole, Dialkylester von Natriumsulfosuccinaten, bei der die Alkylgruppe mindetens 3 Kohlenstoffatome hat. Seifen, die sich von Fettsäuren mit 10 bis 22 Kohlenstoffatomen ableiten, Alkalisalze von Alkyl- oder Alkylensulfaten mit 10 bis 26 Kohlenstoffatomen. Außerdem eignen sich ethoxylierte Fettalkohole und ethoxylierte Amine. Wenn man die Netzmittel bereits bei der Polymerisation einsetzt, erhält man bsonders feinteilige Wasser-in-Öl-Polymeremulsionen.

Für die Herstellung der Wasser-in-Öl-Polymeremulsionen von N-Vinylamiden verwendet man 1 bis 30 Gew.-%, bezogen auf die Monomeren, an Wasser-in-Öl-Emulgatoren, die oben beschrieben wurden. Die Polymerisation der Wasser-in-Öl-Monomeremulsion erfolgt bei Temperaturen von 5 bis 150°C. Die Polymerisation wird vorzugsweise bei Normaldruck durchgeführt, kann jedoch auch zur Einstellung der Temperatur unter vermindertem oder erhöhtem Druck vorgenommen werden. Während der Polymerisation wird für eine gute Durchmischung der Reaktionsteilnehmer gesorgt. Im technischen Betrieb bieten sich hierfür Rührkessel an, die mit einem Ankerrührer ausgestattet sind. Die Drehzahl des Rührers beträgt etwa 100 bis 400 Umdrehungen/Minute. Die Polymerisation wird vorzugsweise so geführt, daß die Monomeren praktisch vollständig polymerisieren. Gegebenenfalls kann sich an die Hauptpolymerisation eine Nachpolymerisation anschließen, bei der man zum Reaktionsgemisch beispielsweise noch weitere Mengen an Peroxid oder Azoverbindungen zusetzt.

Manchmal ist es vorteilhaft, einen Teil der Emulgatormischung oder nur einen Teil der Emulgatoren (a) und/oder (b) vorzulegen und den Rest kontinuierlich oder portionsweise während der Polymerisation zuzusetzen. Die Polymerisation kann auch so geführt werden, daß man die Wasser-in-Öl-Emulsion der Monomeren herstellt, einen Teil von etwa 10 bis 20 % im Polymerisationsreaktor mit Initiator versetzt und auf die gewünschte Polymerisationstemperatur erhitzt. Nach dem Start der Reaktion wird dann zur besseren Wärmeabführung die restliche Wasser-in-Öl-Emulsion des Monomeren und der Initiator innerhalb von etwa 1 bis 10 Stunden zudosiert. Wird der ganze Polymerisationsansatz im Reaktor vorgelegt, führt man die entstehende Polymerisationswärme vorteilhaft mit einem Kaltwassersatz ab. Eine weitere Möglichkeit zur Abführung der Polymerisationswärme ist die Siedekühlung. Dabei wird das verdampfte Wasser oder bzw. das azeotrope Gemisch kondensiert und entweder in den Polymerisationsansatz zurückgeführt oder vorteilhafter aus dem System entfernt, wodurch eine Aufkonzentration der Wasser-in-Öl-Emulsion erzielt wird.

Man erhält auf diese Weise Wasser-in-Öl-Polymeremulsionen mit einem Polymergehalt von 10 bis 50 Gew.-%. Falls Wasser-in-Öl-Polymeremulsionen mit einem noch höheren Polymergehalt gewünscht sind, kann der Polymergehalt durch einfaches Abdestillieren von Wasser und gegebenenfalls auch azeotropes Entfernen von Wasser und Kohlenwasserstofföl aufkonzentriert werden. Dadurch erhält man Wasser-in-Öl-Polymeremulsionen mit einem Polymerisationsgehalt von bis zu 70 Gew.-%. Besonders stabile Wasser-in-öl-Polymeremulsionen erhält man, wenn man die oben beschriebene Emulgatormischung aus den Komponenten (a) und (b) bereits bei der Herstellung der noch nicht hydrolysierten Wasser-in-Öl-Polymeremulsion einsetzt.

Polymerisate der N-Vinylamide der Formel I sowie die Copolymerisate haben K-Werte von 20 bis 300, vorzugsweise 50 bis 280. Für die meisten Anwendungen sind K-Werte der Polymerisate von 100 bis 250 von besonderem Interesse.

In der zweiten Verfahrensstufe des erfindungsgemäßen Verfahrens erfolgt die Hydrolyse der in der ersten Stufe hergestellten Polymerisate. Die Polymerisate enthalten mindestens 1 Mol-% an Einheiten der Formel 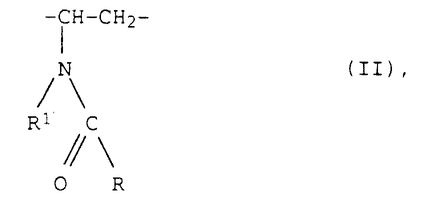 in der R, R¹ = H, C₂- bis C₆-Alkyl bedeuten, und die durch Hydrolyse in Einheiten der Formel 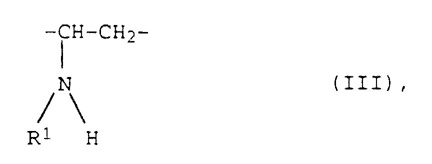 in der R¹ = H oder C₁- bis C₆-Alkyl ist, umgewandelt werden. In Abhängigkeit von den Reaktionsbedingungen bei der Hydrolyse, d.h. der Menge an Säure oder Base, bezogen auf das zu hydrolysierende Polymerisat, und der Reaktionstemperatur bei der Hydrolyse erhält man entweder eine partielle oder vollständige Hydrolyse der Einheiten der Formel (II). Die Hydrolyse der Polymerisate wird so weit geführt, daß z.B. 1 bis 100 % der in den Polymerisaten enthaltenen Monomereinheiten der Formel II, vorzugsweise 10 bis 90 % dieser Einheiten hydrolysiert sind. Um die Hydrolyse durchzuführen, ist es unerläßlich, daß die in der ersten Verfahrensstufe hergestellten Wasser-in-Öl-Polymeremulsionen die oben beschriebenen Emulgatormischungen enthalten.

Diese Emulgatormischungen sind zu 1 bis 30, vorzugsweise 1 bis 20 Gew.-%, bezogen auf die Polymerisate der Wasser-in-Öl-Polymeremulsion, anwesend, wenn die Hydrolyse der in den Polymerisaten enthaltenen Monomereinheiten (II) durchgeführt wird. In der bevorzugten Ausführungsform des erfindungsgemäßen Verfahrens werden diese Emulgatoren bereits bei der Herstellung der Wasser-in-Öl-Polymeremulsionen eingesetzt. Man kann den Emulgator (a) jedoch auch zu solchen Wasser-in-Öl-Emulsionen von N-Vinylamiden der Formel I zusetzen, die in Gegenwart anderer, von den Emulgatoren (a) verschiedenen üblichen Wasser-in-Öl-Emulgatoren hergestellt wurden. Die Hydrolyse erfolgt unter Reaktionsbedingungen, unter denen üblicherweise Wasser-in-Öl-Polymeremulsionen nicht beständig sind. Man gibt nämlich zur Hydrolyse eine Säure oder Base zu der in der ersten Verfahrensstufe hergestellten Wasser-in-Öl-Polymeremulsion, die die Emulgatormischung aufweist oder zu der ebenfalls diese Emulgatormischung enthaltenen aufkonzentrierten Wasser-in-Öl-Polymeremulsionen zu. Für die Hydrolyse geeignete Säuren sind beispielsweise Mineralsäuren, wie Halogenwasserstoff (gasförmig oder in wäßriger Lösung), Schwefelsäure, Sal-petersäure, Phosphorsäure (ortho-, meta-Polyphosphorsäure) und organische Säuren, z.B. C₁- bis C₅-Carbonsäuren, wie Ameisensäure, Essigsäure und Propionsäure oder die aliphatischen oder aromatischen Sulfonsäuren, wie Methansulfonsäure, Benzolsulfonsäure oder Toluolsulfonsäure. Vorzugsweise verwendet man zur Hydrolyse Salzsäure oder Schwefelsäure. Bei der Hydrolyse mit Säuren beträgt der pH-Wert 0 bis 5. Pro Formylgruppenäquivalent im Polymerisat benötigt man 0,05 bis 1,5 Äquivalente an Säure, vorzugsweise 0,4 bis 1,2.

Bei der Hydrolyse mit Basen können Metallhydroxide von Metallen der ersten und zweiten Hauptgruppe des Periodischen Systems verwendet werden, beispielsweise eignen sich Lithiumhydroxid, Natriumhydroxid, Kaliumhydroxid, Kalziumhydroxid, Strontiumhydroxid und Bariumhydroxid. Ebenso können aber auch Ammoniak und Alkylderivate des Ammoniaks verwendet werden, z.B. Alkyl- oder Arylamine z.B. Triethylamin, Monoethanolamin, Diethanolamin, Triethanolamin, Morpholin oder Anilin. Bei der Hydrolyse mit Basen beträgt der pH-Wert 8 bis 14. Die Basen können in festem, flüssigem oder gegebenenfalls auch in gasförmigem Zustand verdünnt oder unverdünnt eingesetzt werden. Vorzugsweise verwendet man als Basen für die Hydrolyse Ammoniak, Natronlauge oder Kalilauge. Die Hydrolyse im sauren oder im alkalischen pH-Bereich erfolgt bei Temperaturen von 30 bis 170, vorzugsweise 50 bis 120°. Sie ist nach etwa 2 bis 8, vorzugsweise 3 bis 5 Stunden beendet. Nach diesen Reaktionszeiten erreicht man Hydrolysegrade der Einheiten der Formel II im Polymerisat von 1 bis 100 %, vorzugsweise 10 bis 90 %. Besonders bewährt hat sich eine Verfahrensweise, bei der zur Hydrolyse die Basen oder Säuren in wäßriger Lösung zugesetzt werden und bei der man durch azeotrope Destillation während der Hydrolyse die Polymerkonzentration der Wasser-in-Öl-Polymeremulsion in dem Bereich von 20 bis 50 % hält. Die hydrolysierte Wasser-in-Öl-Polymeremulsion kann auch nach Beendigung der Hydrolyse aufkonzentriert werden, z.B. auf Polymergehalte von 25 bis 70 Gew.-%, bezogen auf die gesamte Emulsion. Nach der Hydrolyse führt man im allgemeinen eine Neutralisation durch, so daß der pH-Wert der hydrolysierten Wasser-in-Öl-Polymeremulsion 2 bis 8, vorzugsweise in dem Bereich von 3 bis 7 liegt. Die Neutralisation ist dann erforderlich, wenn ein Fortschreiten der Hydrolyse von teilweise hydrolysierten Polymerisaten vermieden werden soll. Zur Neutralisation saurer Hydrolysate eignen sich Metallhydroxide, insbesondere Natronlauge oder Kalilauge, Ammoniak oder Amine. Basische Hydrolysate neutralisiert man mit Mineralsäuren, vorzugsweise Halogenwasserstoff (gasförmig oder in wäßriger Lösung) oder organischen Säuren, z.B. C₁- bis C₅-carbonsäuren. Die bei der Hydrolyse entstehenden Carbonsäuren können z.B. mit einem C₂- bis C₄-Alkohol verestert und die Ester anschließend azeotrop aus der Wasser-in-Öl-Polymeremulsion abdestilliert werden. Man erhält dadurch bei der anschließenden Neutralisation salzärmere Wasser-in-Öl-Polymeremulsionen. Die Viskosität der hydrolysierten Wasser-in-Öl-Polymerisate beträgt bei 20°C 20 bis 10.000, bevorzugt 50 bis 5.000 mPas. Diese Wasser-in-Öl-Polymeremulsionen können somit in einfacher Weise gehandhabt werden. Beispielsweise ist es möglich, sie zu pumpen.

Für die Anwendung der Wasser-in-Öl-Emulsionen von hydrolysierten Polymerisaten ist es wünschenswert, daß diese Produkte beim Eingießen in Wasser rasch invertieren. Wie für Emulsionen dieses Typs aus der US-PS 3 624 019 bekannt ist, kann man sie dadurch invertierend einstellen, daß man 0,5 bis 10, vorzugsweise 1 bis 5 % eines Netzmittels zugibt, das einen HLB-Wert von mindestens 9 aufweist. Geeignete Tenside dieser Art sind beispielsweise die Anlagerungsprodukte von 8 bis 30 Mol Ethylenoxid an C₈- bis C₁₂-Alkylphenole oder die Anlagerungsprodukte von 5 bis 30 Mol Ethylenoxid an C₁₂- bis C₁₈-Alkohole oder C₁₀-/C₁₂-Alkylsulfonate. Weitere geeignete Netzmittel sind Anlagerungsprodukte von Alkylenoxid-Mischungen oder von Blöcken an C₉- bis C₁₈-Alkoholen. Bestandteile der Mischungen oder der Blöcke sind 1 bis 30 Mol Ethylenoxid, bis 30 Mol Propylenoxid und bis 30 Mol Butylenoxid, bezogen auf den Alkohol oder die Alkoholmischungen. Wenn man netzmittelhaltige Wasser-in-Öl-Polymeremulsionen in Wasser eingießt, tritt eine Phasenumkehr ein und das in den Emulsionen enthaltene Polymere löst sich rasch in Wasser auf.

Die erfindungsgemäß hergestellten Wasser-in-Öl-Emulsionen von hydrolysierten N-Vinylformamidpolymerisaten werden beispielsweise als Retentions- und Flockungsmittel bei der Herstellung von Papier, zur Klärung von Abwässern und Schlämmen, wie z.B. in Kläranlagen, als Dispergiermittel und Schutzkolloid für Bohrschlämme, als Hilfsmittel bei der Sekundärförderung und Tertiärförderung von Erdöl in Flutwässern, als Korrosionsschutzmittel und als Zementadditiv eingesetzt. Die schwach vernetzten Polymeren sind geeignet als Verdickungsmittel, beispielsweise für Textildruckpasten oder auch in Reinigerformulierungen. In allen Fällen benötigt man sehr verdünnte wäßrige Lösungen, die beim Anwender durch Invertieren von netzmittelhaltigen Wasser-in-Öl-Polymeremulsionen von hydrolysierten N-Vinylamidpolymerisaten hergestellt werden. Die erfindungsgemäßen Wasser-in-Öl-Polymeremulsionen sind sedimentationsstabil.

Die K-Werte wurden bestimmt nach H. Fikentscher, Cellulose-Chemie, Band 13, 58-64 und 71-74 (1932); dabei bedeutet K = k · 10³. Die K-Werte der Copolymerisate wurden bei einer Polymerisatkonzentration von 0,1 Gew.-% in einer wäßrigen Salzlösung bestimmt, die durch Auflösen von 5 g Kochsalz und 0,08 g des Anlagerungsprodukts von 10 Mol Ethylenoxid an 1 Mol Isononylphenol in 94,92 g destilliertem Wasser hergestellt wurde. Die Messungen wurden bei 25°C durchgeführt.

Die Viskosität der Wasser-in-Öl-Emulsionen wird mit einem Brookfieldviskosimeter bei 20 upm und 23°C gemessen.

Die Prozentangaben in den Beispielen beziehen sich, falls nichts anderes angegeben ist, auf das Gewicht.

### Emulgator 1 (Komponente (a) des Emulgatorgemisches)

Polyester-Polyethylenoxid-Polyester-Blockcopolymerisat mit einer Molmasse > 1.000 g/mol, das durch Umsetzung von kondensierter 12-Hydroxystearinsäure mit Polyethylenoxid gemäß der Lehre der EP-A-0 000 424 hergestellt wird und im Handel unter der Bezeichnung Hypermer B246 vertrieben wird.

### Emulgator 2

Sorbitanmonooleat, das unter dem Namen Span 80 von der Firma ICI in Handel angeboten wird.

### Emulgator 3

Umsetzungsprodukt von (A) Oleylalkohol mit Epichlorhydrin im Molverhältnis 1:1 zu Oleylglycidylether, (B) Reaktion des Oleylglycidylethers mit Glycerin im Molverhältnis 1:1 in Gegenwart von BF₃-Phosphorsäure bei einer Temperatur von 80°C und Entfernen des Katalysators mit Hilfe eines basischen Ionenaustauschers und (C) Ethoxylierung des Reaktionsprodukts gemäß (B) mit 2 Mol Ethylenoxyd. Die Herstellung erfolgt nach der Lehre der GB-A-1 562 417.

### Beispiel 1

In einem 2 1 fassenden Polymerisationsreaktor, der mit Ankerrührer, Rückflußkühler, Thermometer, Stickstoffeinlaß versehen ist, werden unter Rühren folgende Substanzen vorgelegt: 290 g eines Kohlenwasserstoffgemisches vom Siedebereich 192 bis 254°C, 8 g Emulgator 1 und 32 g Emulgator 2. Dazu wird eine Lösung von 4,9 g 75 %iger Phosphorsäure, 3,3 g 50 %iger Natronlauge und 250 g frisch destilliertem N-Vinylformamid in 401 g Wasser mit einem pH-Wert von 6,3 zugesetzt. Der Behälterinhalt wird 1 Std. bei einer Rührgeschwindigkeit von 400 Upm unter Einleiten von 10 1/std. Stickstoff emulgiert. Anschließend werden 0,25 g 2,2'-Azobis(4-methoxy-2,4-dimethylvaleronitril) und 0,125 g 2,2'-Azobis(2,4-dimethylvaleronitril) suspendiert in 10 g Kohlenwasserstoffgemisch zugesetzt und bei 30°C 8 Std. unter Rühren bei 400 Upm und Begasen mit 10 1/Std. Stickstoff polymerisiert. Anschließend wird noch 4 Std. bei 55°C auspolymerisiert. Die dünne, stippen- und koagulatfreie Emulsion besitzt eine Viskosität von 80 mPa·s. Der K-Wert des Polymeren beträgt 212. Der Ansatz wird auf 50°C abgekühlt und zur Hydrolyse des Polyvinylformamids innerhalb von 0,5 Std. 45,1 g Chlorwasserstoff (gasförmig) eingeleitet. Die Hydrolyse wird nach einer Dauer von 5 Std. bei 50°C abgebrochen. Nach dieser Zeit sind 30 % der Formamidgruppen des Poly-N-Vinylformamids in Amingruppen umgesetzt. Die Reaktionsmischung wird nun auf 20°C abgekühlt und durch Einleiten von gasförmigem Ammoniak auf einen pH-Wert von 5 eingestellt. Dann werden innerhalb von 0,5 Std. unter Rühren 30 g des Anlagerungsprodukts von 10 Mol Ethylenoxid an 1 Mol Isononylphenol zugesetzt und noch 2 Std. gerührt. Die erhaltene Wasser-in-Öl-Emulsion ist dünn und glatt sowie frei von Stippen und Koagulat. Die Viskosität der Emulsion beträgt 90 mPa·s. Die Emulsion invertiert beim Eingießen in Wasser, wobei sich das Polymerisat in Wasser rasch auflöst.

### Beispiel 2

Beispiel 1 wird mit der Ausnahme wiederholt, daß als Emulgatormischung 7 g Emulgator 1 und 28 g Emulgator 2 eingesetzt werden. Vor der Hydrolyse ist die Viskosität der stippen- und koagulatfreien Dispersion 80 mPa·s und der K-Wert des Polymeren beträgt 230. Nach Hydrolyse und Zusatz des Tensids beträgt die Viskosität 120 mPa·s.

### Beispiel 3

Beispiel 1 wird mit der Ausnahme wiederholt, daß als Emulgatormischung 4 g Emulgator 1 und 36 g Emulgator 2 eingesetzt werden. Vor der Hydrolyse ist die Viskosität der stippen- und koagulatfreien Dispersion 70 mPas und der K-Wert des Polymeren beträgt 202. Nach der Hydrolyse und Zuatz des Tensids beträgt die Viskosität 86 mPas.

### Beispiel 4

In einem Reaktor gemäß Beispiel 1 werden unter Rühren 230 g eines Kohlenwasserstoffgemisches vom Siedebereich 192 bis 254°C, 9 g Emulgator 1 und 27 g Emulgator 2 vorgelegt. Dazu wird eine Lösung von 5,88 g 75 %iger Phosphorsäure, 3,96 g 50 %ige Natronlauge und 300 g frisch destilliertes N-Vinylformamid in 399 g Wasser mit einem pH-Wert von 6,3 zugesetzt. Der Behälterinhalt wird 1 Std. bei einer Rührgeschwindigkeit von 400 Upm unter Einleiten von 10 1/Std. Stickstoff emulgiert. Anschließend werden 0,3 g 2,2'-Azobis(4-methoxy-2,4-dimethylvaleronitril) und 0,15 g 2,2'-Azobis(2,4-dimethylvaleronnitril) suspendiert in 10 g Kohlenwasserstoff zugesetzt und bei 30°C 8 Std. unter Rühren bei 400 Upm und Begasen mit 10 1/Std. Stickstoff polymerisiert. Anschließend wird noch 4 Std. bei 40°C auspolymerisiert. Die Viskosität der Wasser-in-Öl-Emulsion ist 260 mPas und der K-Wert des Polymeren beträgt 227. Der Ansatz wird nun auf 50°C erhitzt und zur Hydrolyse des Polyvinylformamids innerhalb von 1 Std. 74 g Chlorwasserstoff (gasförmig) eingeleitet. Die Hydrolyse wird nach einer Dauer von 5 Std. bei 50°C abgebrochen. Nach dieser Zeit sind 40 % der Formamidgruppen des Poly-N-Vinylformamids in Amingruppen umgesetzt. Die Reaktionsmischung wird nun auf 20°C abgekühlt und durch Einleiten von gasförmigem Ammoniak auf einen pH-Wert von 5 eingestellt. Dann werden innerhalb von 0,5 Std. 30 g des Anlagerungsproduktes von 10 Mol Ethylenoxid an 1 Mol Isononylphenol zugesetzt und noch 2 Std. gerührt. Die erhaltene Wasser-in-Öl-Emulsion ist dünn und glatt sowie frei von Stippen und Koagulat. Die Viskosität der Emulsion beträgt 210 mPa·s. Die Emulsion invertiert beim Eingießen in Wasser, wobei sich das Polymerisat in Wasser problemlos auflöst.

### Beispiel 5

In einen Reaktor gemäß Beispiel 1 werden unter Rühren vorgelegt 307 g Kohlenwasserstoffgemisch vom Siedebereich 192 bis 254°C, 18 g Emulgator 2 und 6 g Emulgator 1. Dazu wird eine Lösung von 5,88 g 75 %iger Phosphorsäure, 3,96 g 50 %iger Natronlauge und 300 g frisch destilliertem N-Vinylformamid in 199 g Wasser mit einem pH-Wert von 6,5 zugesetzt. Der Behälterinhalt wird eine Stunde bei einer Rührgeschwindigkeit von 400 Upm unter Einleiten von 10 1/Std. Stickstoff emulgiert. Anschließend werden 0,3 g 2,2'-Azobis(4-methoxy-2,4-dimethylvaleronitril) und 0,15 g 2,2'-Azobis(2,4-dimethylvaleronitril), supendiert in 10 g Kohlenwasserstoff, zugesetzt und bei 30°C 8 Std. unter Rühren bei 400 Upm und Begasen mit 10 1/Std. Stickstoff polymerisiert. Nach 2 Std. und 4 Std. bei 30°C werden jeweils 0,05 g Emulgator 1 und 2,25 g Emulgator 2 dem Reaktionsansatz zugesetzt. Nach 8 Std. Polymerisation bei 30°C wird auf 40°C erhitzt und weitere 4 Std. auspolymerisiert. Die Viskosität der Wasser-in-Öl-Emulsion ist 30 mPas und der K-Wert des Polymeren beträgt 230. Der Ansatz wird nun auf 50°C erhitzt und zur Hydrolyse des Polyvinylformamids innerhalb von 0,5 Std. 25 g Chlorwasserstoff (gasförmig) eingeleitet. Die Hydrolyse wird nach einer Dauer von 5 Std. bei 50°C abgebrochen. Nach dieser Zeit sind 11 % der Formamidgruppen in Amingruppen umgesetzt. Die Reaktionsmischung wird durch Zugabe von 50 %iger Natronlauge auf einen pH-Wert von 5 eingestellt. Dann werden innerhalb von 0,5 Std. 30 g des Anlagerungsproduktes von 10 Mol Ethylenoxid an 1 Mol Isononylphenol zugesetzt und noch 2 Std. gerührt. Die erhaltene dünne, stippen- und koagulatfreie Wasser-in-Öl-Emulsion hat eine Viskosität von 50 mPas. Die Emulsion invertiert bei Eingießen in Wasser, wobei das Polymerisat in Wasser problemlos löslich ist.

### Beispiel 6

In einem Reaktor gemäß Beispiel 1 werden vorgelegt 200 g Rapsöl, 20 g Emulgator 1 und 20 g Emulgator 2. Dazu wird eine Lösung von 100 g frisch destilliertem N-Vinylformamid in 200 g Wasser gegeben und 0,5 Std. bei 200 Upm Rührung mit 15 1/Std. Stickstoff begast bei einer Temperatur von 25°C. Nun werden 0,4 g 2,2'-Azobis(2,4-dimethylvaleronitril) gelöst in 1 g Aceton zugesetzt und das Reaktionsgemisch auf 55°C erhitzt. Durch Badkühlung wird die Reaktionswärme abgeführt und die Innentemperatur konstant bei 55°C gehalten. Wenn die Reaktion beendet ist, wird noch 2 Std. bei 55°C auspolymerisiert. Die koagulatfreie Emulsion hat eine Viskosität von 1.400 mPa·s und der K-Wert des Polymeren beträgt 194. Nun wird abgekühlt auf 50°C und innerhalb von 30 min 8 g Chlorwasserstoff (gasförmig) zudosiert. Die Hydrolyse wird nach einer Dauer von 5 Std. abgebrochen, wobei 13 % der Formamidgruppen des Poly-N-Vinylformamids in Amingruppen umgesetzt sind. Die Reaktionsmischung wird durch Einleiten von Ammoniakgas auf einen pH-Wert von 5 eingestellt. Dann werden innerhalb von 0,5 Std. unter Rühren 18 g des Anlagerungsproduktes von 6,8 Mol Ethylenoxid und 3,2 Mol Propylenoxid an 1 Mol C₁₃- bis C₁₅-Oxoalkohol zugesetzt und 2 Std. eingerührt. Nach Abkühlen liegt eine koagulatfreie Emulsion mit einer Viskosität von 1.200 mPa·s vor. Die Emulsion invertiert beim Eingießen in Wasser, wobei das Polymerisat in Wasser problemlos löslich ist.

### Beispiel 7

Beispiel 6 wird mit der Ausnahme wiederholt, daß man als Emulgator 10 g Emulgator 1 und 5 g Emulgator 3 einsetzt. Nach der Polymerisation jedoch vor der Hydrolyse hat die koagulatfreie Dispersion eine Viskosität von 950 mPa·s. Der K-Wert des Polymeren beträgt 194. Nach der Hydrolyse werden 18 g eines Umsetzungsproduktes von 1 Mol C₁₃- bis C₁₅-Oxoalkohls mit 2 Mol Ethylenoxid und 4 Mol Propylenoxid zugesetzt. Nach Abkühlen liegt eine koagulatfreie Emulsion mit einer Viskosität von 850 mPa·s vor, die beim Eingießen in Wasser invertiert.

## Patentansprüche

1. Verfahren zur Herstellung von stabilen Wasser-in-öl-Emulsionen von hydrolysierten Polymerisaten von N-Vinylamiden der Formel 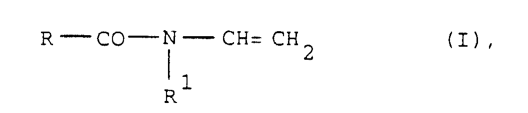 in der R, R¹ = H oder C₁- bis C₆-Alkyl bedeuten, durch Polymerisieren von Verbindungen der Formel I allein oder in Mischung mit anderen ethylenisch ungesättigten Monomeren in Gegenwart von Polymerisationsinitiatoren und Emulgatoren in Form von Wasser-in-Öl-Emulsionen zu Wasser-in-öl-Polymeremulsionen und anschließende Hydrolyse der Polymerisate in Form der Wasser-in-Öl-Polymeremulsionen in Gegenwart von Säuren oder Basen und 1 bis 30 Gew.-%, bezogen auf die Polymerisate, an Emulgatoren, dadurch gekennzeichnet, daß man als Emulgatoren Mischungen aus
(a) 5 bis 95 Gew.-% eines Block- oder Pfropfcopolymerisates der Struktur (A-B)ₘ, (A)ₙB oder (B)ₙA, in der jeweils
A ein hydrophobes Homo- oder Copolymerisat mit einem Polymerisationsgrad von mindestens 3, B ein hydrophiles Homo- oder Copolymerisat mit einem Polymerisationsgrad von mindestens 3, m ≥ 1 und n ≥ 2 ist, und
(b) 5 bis 95 Gew.-% eines anderen Wasser-in-Öl-Emulgators mit einer Molmasse unterhalb von 1000 g/mol
einsetzt.

2. Verfahren nach Anspruch 1, dadurch gekennzeichnet, daß bei dem Emulgator (a) die Molmassenanteile A und B in den Strukturen (A-B)ₘ, (A)ₙB und/oder (B)ₙA mindestens 500 g/mol betragen.

3. Verfahren nach Anspruch 1 oder 2, dadurch gekennzeichnet, daß die Emulgatormischung
(a) amphiphile Block- oder Pfropfcopolymere der allgemeinen Formel (A-COO)ₘ-B, in der A ein hydrophobes Polymer mit einer Molmasse von > 500 g/mol auf Basis einer Polyhydroxycarbonsäure, B ein bifunktionelles hydrophiles Polymer mit einer Molmasse von > 500 g/mol auf Basis eines Polyalkylenoxids und m mindestens 2 ist und
(b) einen anderen Wasser-in-Ö-Emulgator mit einer Molmasse unterhalb von 1000 g/mol
enthalten.

4. Verfahren nach Anspruch 1 bis 3, dadurch gekennzeichnet, daß die Emulgatormischungen
(a) amphiphile Block- oder Pfropfcopolymere der allgemeinen Formel (A-COO)ₘ-B, in der A ein hydrophobes Polymer mit einer Molmasse von > 500 g/mol auf Basis einer Polyhydroxycarbonsäure, B ein bifunktionelles hydrophiles Polymer mit einer Molmasse von > 500 g/mol auf Basis eines Polyalkylenoxids und m mindestens 2 ist und
(b) Sorbitanmonooleat, Sorbitanmonostearat, Sorbitandioleat, Sorbitantrioleat und/oder Sorbitantristearat enthalten.

5. Verfahren nach einem der Ansprüche 1 bis 4, dadurch gekennzeichnet, daß als Verbindung der Formel I N-Vinylformamid eingesetzt wird.

6. Verfahren nach einem der Ansprüche 1 bis 5, dadurch gekennzeichnet, daß man Copolymerisate aus
(1) 99 bis 1 Mol-% Vinylformamid und
(2) 1 bis 99 Mol-% eines ethylenisch ungesättigten Monomeren aus der Gruppe Vinylformiat, Vinylacetat, Vinylpropionat, N-Vinylpyrrolidon, N-Vinylcaprolactam, N-Vinylimidazol, N-Vinyl-2-methylimidazol, N-Vinyl-2-ethylimidazol sowie der Salze, Ester, Nitrile und Amide von Acrylsäure und Methacrylsäure oder deren Mischungen hydrolysiert.

7. Verfahren nach einem der Ansprüche 1 bis 6, dadurch gekennzeichnet, daß 1 bis 100 % der in den Polymerisaten einpolymerisiert enthaltenen Einheiten der Verbindungen der Formel I hydrolysiert sind.

8. Stabile Wasser-in-Öl-Emulsionen von hydrolysierten Polymerisaten von N-Vinylamiden erhältlich nach dem Verfahren der Ansprüche 1 bis 7.

9. Verwendung der nach den Ansprüchen 1 bis 7 erhältlichen Wasser-in-Öl-Emulsionen von hydrolysierten Poly-N-Vinylamiden als Retentions- und Flockungsmittel bei der Herstellung von Papier, zur Klärung von Abwässern und Schlämmen in Kläranlagen, als Dispergiermittel und Schutzkolloid für Bohrschlämme und als Zementadditiv.

## Claims

1. A process for the preparation of stable water-in-oil emulsions of hydrolyzed polymers of N-vinylamides of the formula 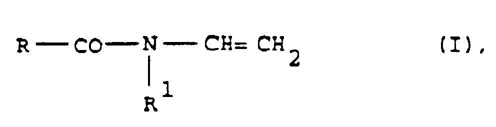 where R and R¹ are each H or C₁- to C₆-alkyl, by polymerizing a compound of the formula I alone or as a mixture with other ethylenically unsaturated monomers in the presence of polymerization initiators and emulsifiers in the form of water-in-oil emulsions to give water-in-oil polymer emulsions and subsequently hydrolyzing the polymers in the form of the water-in-oil polymer emulsions in the presence of acids or bases and from 1 to 30% by weight, based on the polymers, of emulsifiers, wherein the emulsifiers used are mixtures comprising
(a) from 5 to 95% by weight of a block or graft copolymer having the structure (A-B)ₘ, (A)ₙB or (B)ₙA, where in each case A is a hydrophobic homo- or copolymer having a degree of polymerization of at least 3, B is a hydrophilic homo- or copolymer having a degree of polymerization of at least 3, m ≥ 1 and n ≥ 2, and
(b) from 5 to 95% by weight of another water-in-oil emulsifier having a molar mass of less than 1000 g/mol.

2. A process as claimed in claim 1, wherein, in the case of the emulsifier (a), the molar mass fractions A and B in the structures (A-B)ₘ, (A)ₙB and/or (B)ₙA are at least 500 g/mol.

3. A process as claimed in claim 1 or 2, wherein the emulsifier mixture contains
(a) amphiphilic block or graft copolymers of the general formula (A-COO)ₘ-B, where A is a hydrophobic polymer having a molar mass of > 500 g/mol and based on a polyhydroxycarboxylic acid, B is a bifunctional hydrophilic polymer having a molar mass of > 500 g/mol and based on a polyalkylene oxide and m is at least 2, and
(b) another water-in-oil emulsifier having a molar mass of less than 1000 g/mol.

4. A process as claimed in any of claims 1 to 3, wherein the emulsifier mixtures contain
(a) amphiphilic block or graft copolymers of the general formula (A-COO)ₘ-B, where A is a hydrophobic polymer having a molar mass of > 500 g/mol and based on a polyhydroxycarboxylic acid, B is a bifunctional hydrophilic polymer having a molar mass of > 500 g/mol and based on a polyalkylene oxide and m is at least 2, and
(b) sorbitan monooleate, sorbitan monostearate, sorbitan dioleate, sorbitan trioleate and/or sorbitan tristearate.

5. A process as claimed in any of claims 1 to 4, wherein N-vinylformamide is used as the compound of the formula I.

6. A process as claimed in any of claims 1 to 5, wherein copolymers of
(1) from 99 to 1 mol% of vinylformamide and
(2) from 1 to 99 mol% of an ethylenically unsaturated monomer selected from the group consisting of vinyl formate, vinyl acetate, vinyl propionate, N-vinylpyrrolidone, N-vinylcaprolactam, N-vinylimidazole, N-vinyl-2-methylimidazole, N-vinyl-2-ethylimidazole and the salts, esters, nitriles and amides of acrylic acid and methacrylic acid or mixtures thereof are hydrolyzed.

7. A process as claimed in any of claims 1 to 6, wherein from 1 to 100% of the units of the compounds of the formula I which are present as polymerized units in the polymers have been hydrolyzed.

8. A stable water-in-oil emulsion of hydrolyzed polymers of N-vinylamides, obtainable by a process as claimed in any of claims 1 to 7.

9. The use of a water-in-oil emulsion of hydrolyzed poly-N-vinylamides, which emulsion is obtainable as claimed in any of claims 1 to 7, as retention aid and flocculant in paper making, for the treatment of waste waters and sludges in waste water treatment plants, as dispersant and protective colloid for drilling muds and as cement additive.

## Revendications

1. Procédé pour la préparation d'émulsions eau-dans-huile stables de polymères hydrolysés de N-vinylamides de formule 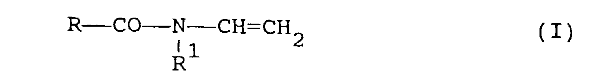 dans laquelle R et R¹ représentent H ou un groupe alkyle en C₁-C₆,
par polymérisation de composés de formule I seuls ou en mélange avec d'autres monomères à insaturation éthylénique, en présence d'amorceurs de polymérisation et d'émulsifiants, sous forme d'émulsions eau-dans-huile, conduisant à des émulsions eau-dans-huile de polymères, et hydrolyse subséquente des polymères sous forme des émulsions eau-dans-huile de polymères, en présence d'acides ou de bases et de 1 à 30 % en poids, par rapport aux polymères, d'émulsifiants, caractérisé en ce que l'on utilise comme émulsifiants des mélanges de
(a) 5 à 95 % en poids d'un copolymère greffé ou séquencé de structure (A-B)ₘ, (A)ₙB ou (B)ₙA, dans laquelle chaque fois
A est un homo- ou copolymère hydrophobe ayant un degré de polymérisation d'au moins 3, B est un homo- ou copolymère hydrophile ayant un degré de polymérisation d'au moins 3, m est ≥ 1 et n est ≥ 2, et
(b) 5 à 95 % en poids d'un autre émulsifiant eau-dans-huile ayant une masse moléculaire inférieure à 1 000 g/mole.

2. Procédé selon la revendication 1, caractérisé en ce que, dans l'émulsifiant (a), les fractions de masse moléculaire A et B dans les structures (A-B)ₘ, (A)ₙB et/ou (B)ₙA s'élèvent au moins à 500 g/mole.

3. Procédé selon la revendication 1 ou 2, caractérisé en ce que le mélange d'émulsifiants contient
(a) des copolymères greffés ou séquencés amphiphiles de formule générale (A-COO)ₘ-B, dans laquelle A est un polymère hydrophobe ayant une masse moléculaire de > 500 g/mole, à base d'un acide polyhydroxycarboxylique, B est un polymère hydrophile bifonctionnel ayant une masse moléculaire de > 500 g/mole, à base d'un polyoxyalkylène et m vaut au moins 2, et
(b) un autre émulsifiant eau-dans-huile ayant une masse moléculaire inférieure à 1 000 g/mole.

4. Procédé selon l'une des revendications 1 à 3, caractérisé en ce que les mélanges d'émulsifiants contiennent
(a) des copolymères greffés ou séquencés amphiphiles de formule générale (A-COO)ₘ-B, dans laquelle A est un polymère hydrophobe ayant une masse moléculaire de > 500 g/mole, à base d'un acide polyhydroxycarboxylique, B est un polymère hydrophile bifonctionnel ayant une masse moléculaire de > 500 g/mole, à base d'un polyoxyalkylène et m vaut au moins 2, et
(b) du mono-oléate de sorbitanne, du monostéarate de sorbitanne, du dioléate de sorbitanne, du trioléate de sorbitanne et/ou du tristéarate de sorbitanne.

5. Procédé selon l'une des revendications 1 à 4, caractérisé en ce que l'on utilise comme composé de formule I le N-vinylformamide.

6. Procédé selon l'une des revendications 1 à 5, caractérisé en ce que l'on hydrolyse des copolymères constitués de
(1) 99 à 1 % en moles de vinylformamide et
(2) 1 à 99 % en moles d'un monomère à insaturation éthylénique choisi dans le groupe constitué par le formiate de vinyle, l'acétate de vinyle, le propionate de vinyle, la N-vinylpyrrolidone, le N-vinylcaprolactame, le N-vinylimidazole, le N-vinyl-2-méthylimidazole, le N-vinyl-2-éthylimidazole ainsi que par les sels, esters, nitriles et amides de l'acide acrylique et de l'acide méthacrylique ou des mélanges de ceux-ci.

7. Procédé selon l'une des revendications 1 à 6, caractérisé en ce que 1 à 100 % des motifs des composés de formule I, contenus en liaison polymère dans les polymères, sont hydrolysés.

8. Emulsions eau-dans-huile de polymères de N-vinylamides hydrolysés stables pouvant être obtenues par le procédé selon les revendications 1 à 7.

9. Utilisation des émulsions eau-dans-huile de poly-N-vinylamides hydrolysés, pouvant être obtenues selon les revendications 1 à 7, en tant qu'agent de rétention et floculant dans la fabrication du papier, pour la clarification d'eaux résiduaires et de boues dans des stations d'épuration, en tant que dispersant et colloïde protecteur pour des boues de forage et comme additif pour ciment.
